# EUROPEAN PATENT APPLICATION

(11) **EP 2 505 875 A1**
(43) Date of publication of application: **03.10.2012**
(21) Application number: 12162220.3
(22) Date of filing: 29.03.2012
(51) Int. Cl.: F16H 3/72

(54) **Transmission device comprising a gearbox having multiple input axles and method using such device**

(30) Priority: 01.04.2011 KR 20110030401
(71) Applicant: Korea Advanced Institute of Science and Technology, Daejon 305-701 (KR)
(72) Inventor: Yoon, Yong San, 305-701 Daejon (KR); Kim, Sun Je, 530-390 Mokpo-si, JeollaNam-do (KR); Kim, Kyung Soo, 137-070 Seoul (KR)
(74) Representative: Michalski, Stefan

(57) **Abstract**

A transmission device for application to a vehicle is disclosed. The transmission device includes a planetary gear (10) device including means (20) for restricting degrees of freedom and a gearbox (100) having at least two independent input axles. The root axle of the gearbox is functionally connected either to the planetary shaft of carrier or to the planetary shaft of the ring gear. The first axle of the gearbox has at least one first gear. An end portion of the first axle is functionally connected to the root axle via a synchronizing device and the other end portion either to the driving axle of the vehicle or to the internal combustion engine. The second axle of the gearbox has at least one second gear which maintains as engaged with said at least one first gear. An end portion of the second axle is a free end and the other end portion is connected to the root axle in such a way that the second axle has a direction of rotation opposite to that of the root axle. The third axle also has an end portion functionally connected to a planetary shaft in such a way that the third axle has a direction of rotation opposite to that of the connected planetary shaft.

## Description

### TECHNICAL FIELD

The present invention relates to a transmission device including a planetary gear device with means for restricting degrees of freedom and a gearbox, and more specifically, a transmission device including a planetary gear device with means for restricting degrees of freedom and a motor/generator connected to the sun gear, and a gearbox having axles connected to the ring gear and the carrier, respectively, in order to provide a smooth and fast shifting operation.

### BACKGROUND

Recently, most vehicles employ automatic transmissions. In spite of the large amount of energy loss and additional costs, the automatic transmissions are widely used due to the conveniences and comfort provided by the same. In order to solve such problems of automatic transmissions, various kinds of automatic geared transmissions have been proposed. However, such automatic geared transmissions have other kinds of problems. For example, the automatic geared transmission having one axle with clutch has a longer period of shifting time, which makes the driver of the vehicle uncomfortable, and the automatic geared transmission having two axle with clutch has a higher costs and short life time.

Therefore, it is the purpose of the present invention to solve such problems by providing a transmission device having a fast and comfortable shifting operation with durability.

### SUMMARY

In accordance with an aspect of the present invention, a transmission device for application to a vehicle is provided. The transmission device comprises a planetary gear device including a sun gear having a first planetary shaft, a carrier having a second planetary shaft, and a ring gear having a third planetary shaft, the first, the second and the third planetary shafts having a substantially same single rotation axis; a motor/generator functionally connected to the first planetary shaft; means for restricting degrees of freedom (hereinafter, 'means for restricting dof), said means for restricting dof selectively synchronizing rotation speeds of any two said planetary shafts; and, a gearbox having one axle functionally connected to the second planetary shaft and another axle functionally connected to the third planetary shaft, the gearbox being arranged either between an internal combustion engine (hereinafter, 'ICE') of the vehicle and the planetary gear device (hereafter, 'left positioned') or between the planetary gear device and a driving shaft of the vehicle (hereafter, 'right positioned').

In accordance with another aspect of the present invention, a transmission device for application to a vehicle is provided. The device comprises a planetary gear device including a sun gear having a first planetary shaft, a carrier having a second planetary shaft, and a ring gear having a third planetary shaft, the first, the second and the third planetary shafts having a substantially same single rotation axis, the third planetary shaft being functionally connected to an ICE; a motor/generator functionally connected to the first planetary shaft; means for restricting dof, said means for restricting dof selectively synchronizing rotation speeds of any two said planetary shafts; and, a gearbox arranged between the planetary gear device and a driving shaft of the vehicle as a right positioned, the gearbox including: a root axle, an end portion of the root axle being functionally connected either to the second planetary shaft or to the third planetary shaft and the other end portion of the same having a first synchronizing device for providing functional connectivity; a first axle having at least one first gear, an end portion of the first axle being functionally connected to the root axle via the first synchronizing device and the other end portion of the same being functionally connected to the driving axle of the vehicle; a second axle having at least one second gear, an end portion of the second axle being connected to the root axle in such a way that the second axle has a direction of rotation opposite to that of the root axle, and the other end portion of the same being a free end, said at least one second gear being maintained as engaged with said at least one first gear; a third axle having at least one third gear, an end portion of the third axle being functionally connected to either to the second planetary shaft or to the third planetary shaft, whichever planetary shaft that does not functionally connected to the root axle, in such a way that the third axle has a direction of rotation opposite to that of the connected planetary shaft, and the other end portion of the same being a free end, said at least one third gear being maintained as engaged with said at least one first gear; a second synchronizing device for selectively synchronizing rotation of one of said at least one second gear to that of the second axle; and, a third synchronizing device for selectively synchronizing rotation of one of said at least one third gear to that of the third axle.

In accordance with another aspect of the present invention, a transmission device for application to a vehicle is provided. The device comprises a planetary gear device including a sun gear having a first planetary shaft, a carrier having a second planetary shaft, and a ring gear having a third planetary shaft, the first, the second and the third planetary shafts having a substantially same single rotation axis, the second planetary shaft being functionally connected to an ICE; a motor/generator functionally connected to the first planetary shaft; means for restricting dof, said means for restricting dof selectively synchronizing rotation speeds of any two said planetary shafts; and, a gearbox arranged between the planetary gear device and a driving shaft of the vehicle as a right positioned, the gearbox including: a root axle, an end portion of the root axle being functionally connected either to the second planetary shaft or to the third planetary shaft and the other end portion of the same having a first synchronizing device for providing functional connectivity; a first axle having at least one first gear, an end portion of the first axle being functionally connected to the root axle via the first synchronizing device and the other end portion of the same being functionally connected to the driving axle of the vehicle; a second axle having at least one second gear, an end portion of the second axle being connected to the root axle in such a way that the second axle has a direction of rotation opposite to that of the root axle, and the other end portion of the same being a free end, said at least one second gear being maintained as engaged with said at least one first gear; a third axle having at least one third gear, an end portion of the third axle being functionally connected to either to the second planetary shaft or to the third planetary shaft, whichever planetary shaft that does not functionally connected to the root axle, in such a way that the third axle has a direction of rotation opposite to that of the connected planetary shaft, and the other end portion of the same being a free end, said at least one third gear being maintained as engaged with said at least one first gear; a second synchronizing device for selectively synchronizing rotation of one of said at least one second gear to that of the second axle; and, a third synchronizing device for selectively synchronizing rotation of one of said at least one third gear to that of the third axle.

In accordance with another aspect of the present invention, a transmission device for application to a vehicle is provided. The device comprises a planetary gear device including a sun gear having a first planetary shaft, a carrier having a second planetary shaft, and a ring gear having a third planetary shaft, the first, the second and the third planetary shafts having a substantially same single rotation axis; a motor/generator functionally connected to the first planetary shaft; means for restricting dof, said means for restricting dof selectively synchronizing rotation speeds of any two said planetary shafts; and, a gearbox arranged between an ICE of the vehicle and the planetary gear device as a left positioned, the gearbox including: a root axle, an end portion of the root axle being functionally connected either to the second planetary shaft or to the third planetary shaft and the other end portion of the same having a first synchronizing device for providing functional connectivity; a first axle having at least one first gear, an end portion of the first axle being functionally connected to the root axle via the first synchronizing device and the other end portion of the same being functionally connected to the ICE of the vehicle; a second axle having at least one second gear, an end portion of the second axle being connected to the root axle in such a way that the second axle has a direction of rotation opposite to that of the root axle, and the other end portion of the same being a free end, said at least one second gear being maintained as engaged with said at least one first gear; a third axle having at least one third gear, an end portion of the third axle being functionally connected to either to the second planetary shaft or to the third planetary shaft, whichever planetary shaft that does not functionally connected to the root axle, in such a way that the third axle has a direction of rotation opposite to that of the connected planetary shaft, and the other end portion of the same being a free end, said at least one third gear being maintained as engaged with said at least one first gear; a second synchronizing device for selectively synchronizing rotation of one of said at least one second gear to that of the second axle; and, a third synchronizing device for selectively synchronizing rotation of one of said at least one third gear to that of the third axle.

In accordance with still another aspect of the present invention, a method for shifting of a vehicle using any one of the above mentioned transmission device is provided. The method comprises the steps of: (a) transmitting power of the ICE or the driving shaft of the vehicle through the root axle to the first axle via either the second axle or the third axle; (b) disengaging said means for restricting dof, whereby degrees of freedom of the planetary gear device becomes two (2); (c) rotating, by the motor/generator, the first planetary shaft and synchronizing rotation of either the second axle or the third axle through which said power of the ICE or the driving shaft is not transmitted with that of said gear thereon; (d) decreasing torque transmitted to any one of said synchronizing devices by applying, by the motor/generator, a torque to the first planetary shaft under a state that power of the ICE or the driving shaft is transmitted to the first axle through both of the second axle and the third axle; (e) disengaging said one of said synchronizing device in step (d) when the torque transmitted to said one of said synchronizing device is decreased to a sufficiently low level; (f) synchronizing speed of the motor/generator to that of the second planetary shaft or the third planetary shaft; and, (g) engaging said means for restricting dof, whereby rotation speeds of all of said planetary shafts are synchronized.

In accordance with an aspect of the present invention, a method for shifting of a vehicle using any one of the above mentioned transmission device is provided. The method comprises the steps of: (a) transmitting power of the ICE or the driving shaft of the vehicle through the first synchronizing device on the root axle to the first axle; (b) disengaging said means for restricting dof, whereby degrees of freedom of the planetary gear device becomes two (2); (c) rotating, by the motor/generator, the first planetary shaft and synchronizing, by the third synchronizing device, rotation of the third axle with that of said at least one third gear thereon; (d) decreasing torque transmitted to the first synchronizing device by applying, by the motor/generator, a torque to the first planetary shaft under a state that power of the ICE or the driving shaft is transmitted to the first axle through both of the root axle via the first synchronizing device and the third axle via the third synchronizing device; (e) disengaging the first synchronizing device when the torque transmitted to the first synchronizing device is decreased to a sufficiently low level; (f) synchronizing speed of the motor/generator to that of the second planetary shaft or the third planetary shaft; and, (g) engaging said means for restricting dof, whereby rotation speeds of all of said planetary shafts are synchronized.

In accordance with an aspect of the present invention, a method for shifting of a vehicle using any one of the above mentioned transmission device is provided. The method comprises the steps of: (a) transmitting power of the ICE or the driving shaft of the vehicle through the planetary gear device to the first axle via the third synchronizing device of the third axle; (b) disengaging said means for restricting dof, whereby degrees of freedom of the planetary gear device becomes two (2); (c) adjusting, by the motor/generator, speed of the first planetary shaft and synchronizing rotation of the root axle with that of the first axle; (d) engaging, by the first synchronizing device, the root axle and the first axle; (e) decreasing torque transmitted to the third synchronizing device by adjusting a torque applied by the motor/generator to the first planetary shaft under a state that power of the ICE or the driving shaft is transmitted through both of the first synchronizing device and the third synchronizing device; (f) disengaging the third synchronizing device when the torque transmitted to the third synchronizing device is decreased to a sufficiently low level; (g) synchronizing speed of the motor/generator to that of the second planetary shaft or the third planetary shaft; and, (h) engaging said means for restricting dof, whereby rotation speeds of all of said planetary shafts are synchronized.

In accordance with an aspect of the present invention, a gearbox for application to a vehicle is provided. The gearbox comprises a root axle, an end portion of the root axle being functionally connected either to the second planetary shaft or to the third planetary shaft and the other end portion of the same having a first synchronizing device for providing functional connectivity; a first axle having at least one first gear, an end portion of the first axle being functionally connected to the root axle via the first synchronizing device and the other end portion of the same being functionally connected either to the driving axle of the vehicle or to the ICE; a second axle having at least one second gear, an end portion of the second axle being connected to the root axle in such a way that the second axle has a direction of rotation opposite to that of the root axle, and the other end portion of the same being a free end, said at least one second gear being maintained as engaged with said at least one first gear; a third axle having at least one third gear, an end portion of the third axle being functionally connected to either to the second planetary shaft or to the third planetary shaft, whichever planetary shaft that does not functionally connected to the root axle, in such a way that the third axle has a direction of rotation opposite to that of the connected planetary shaft, and the other end portion of the same being a free end, said at least one third gear being maintained as engaged with said at least one first gear; a second synchronizing device for selectively synchronizing rotation of one of said at least one second gear to that of the second axle; and, a third synchronizing device for selectively synchronizing rotation of one of said at least one third gear to that of the third axle.

In accordance with an aspect of the present invention, a vehicle having one of the above mentioned transmission device is provided.

### BRIEF DESCRIPTION OF THE DRAWINGS

Fig. 1 shows a transmission device in accordance with an embodiment of the present invention.
Fig. 2 shows a variation of the embodiment illustrated in Fig. 1.
Fig. 3 shows a gearbox with seven shift position which may be used in the embodiment depicted in Fig. 1.
Figs 4 and 5 show gearbox with five shift position and nine shift position, respectively, which may be used in the embodiment depicted in Fig. 1.
Fig. 6 shows a collinear chart for shifting-up operation of the transmission device illustrated in Fig. 1.
Fig. 7 shows torque relationships during shifting-up operation of Fig. 6.
Fig. 8 shows a collinear chart for shifting-up operation of the transmission device illustrated in Fig. 1.

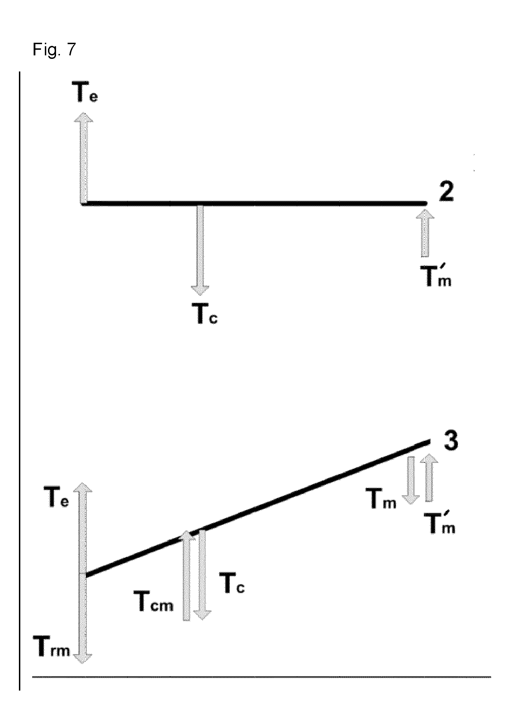

Fig. 7 shows torque relationships in the planetary gear device during shifting-up operation of
Fig. 8.

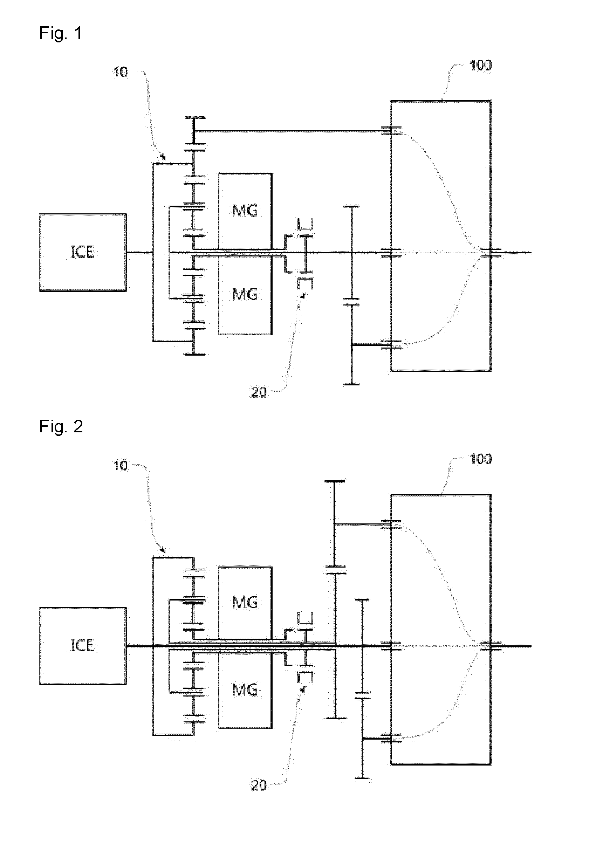

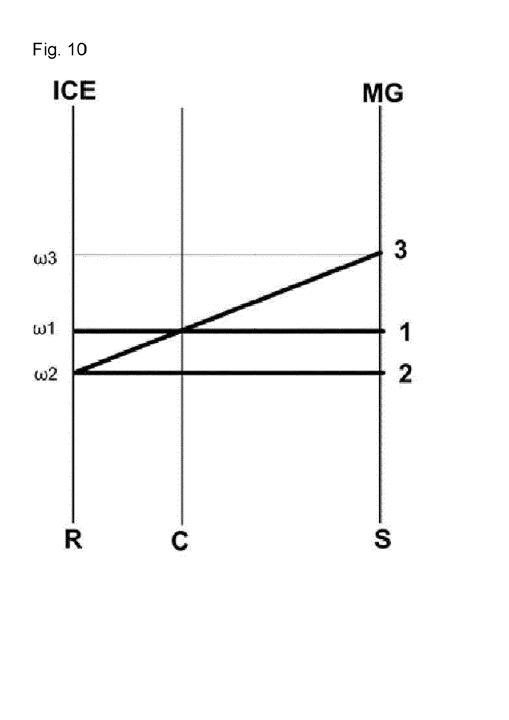

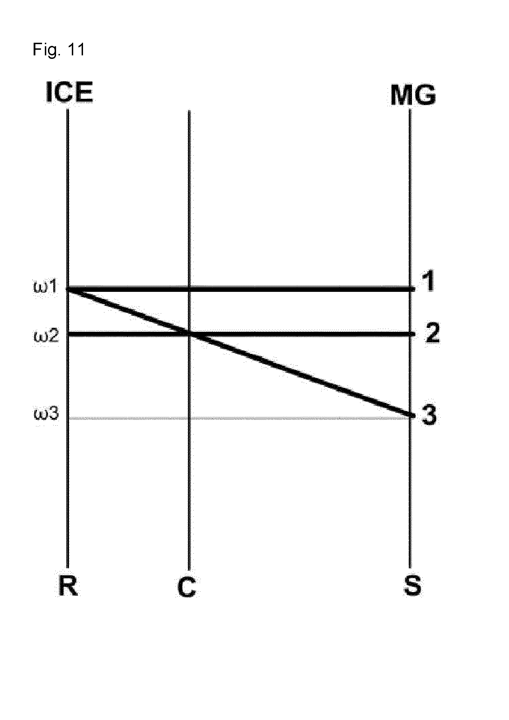

Figs. 10 and 11 show collinear charts for shifting-down operations, respectively, in the transmission device illustrated in Fig. 1.

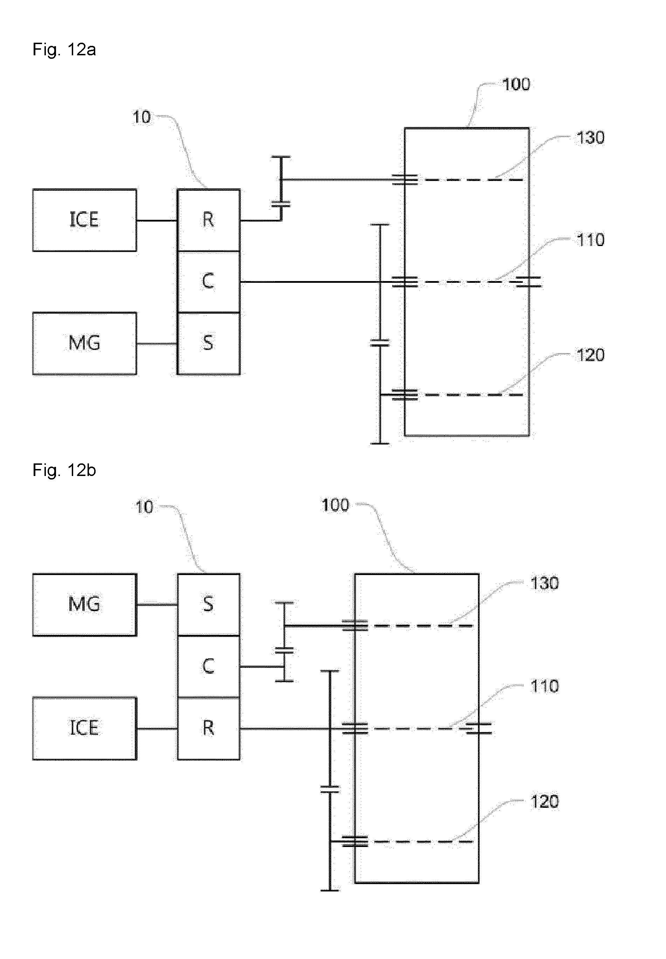

Figs. 12a and 12b show the embodiment depicted in Fig. 1 and a variation in a schematic manner, respectively.

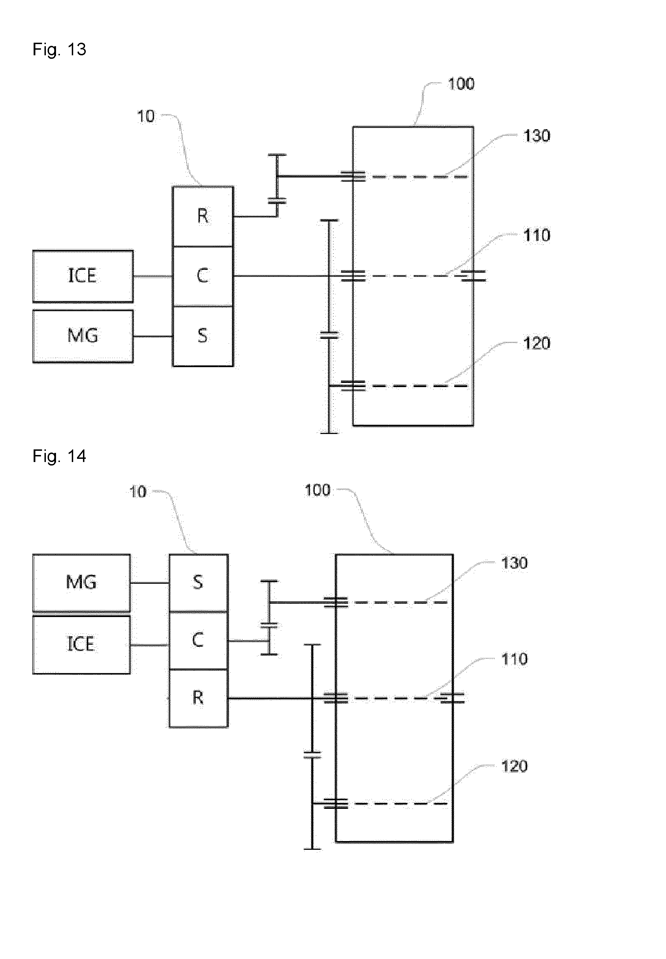

Fig. 13 shows another embodiment in accordance with the present invention.
Fig. 14 show a variation of the embodiment illustrated in Fig. 13.

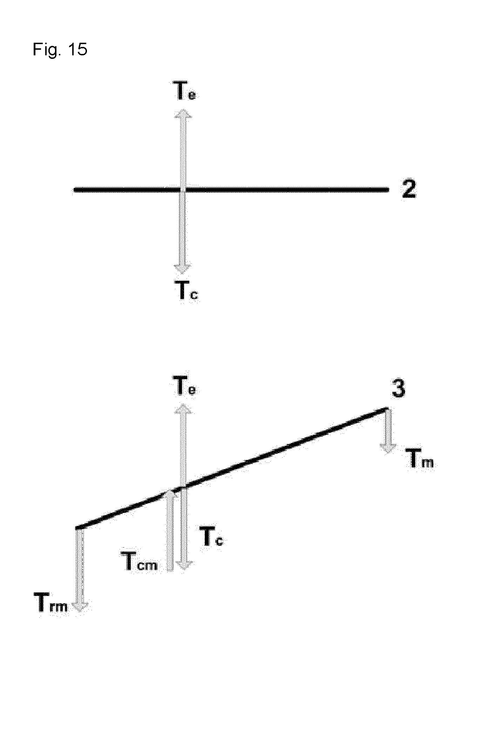

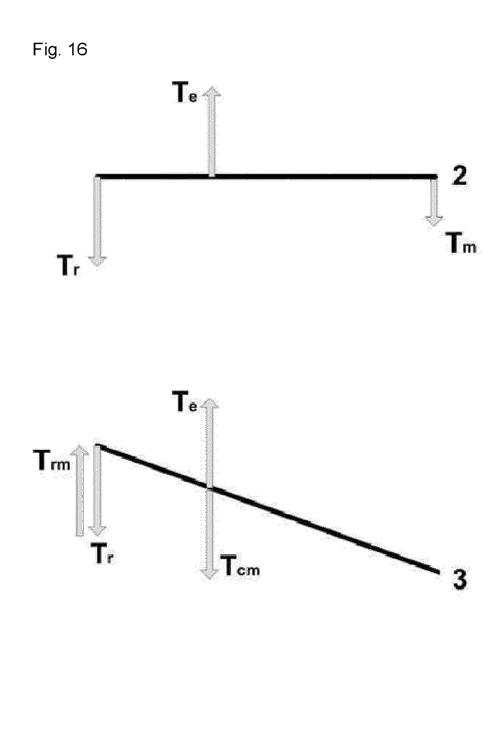

Figs. 15 and 16 show torque relationships in the planetary gear device during shifting-up operation of Fig. 13, respectively.

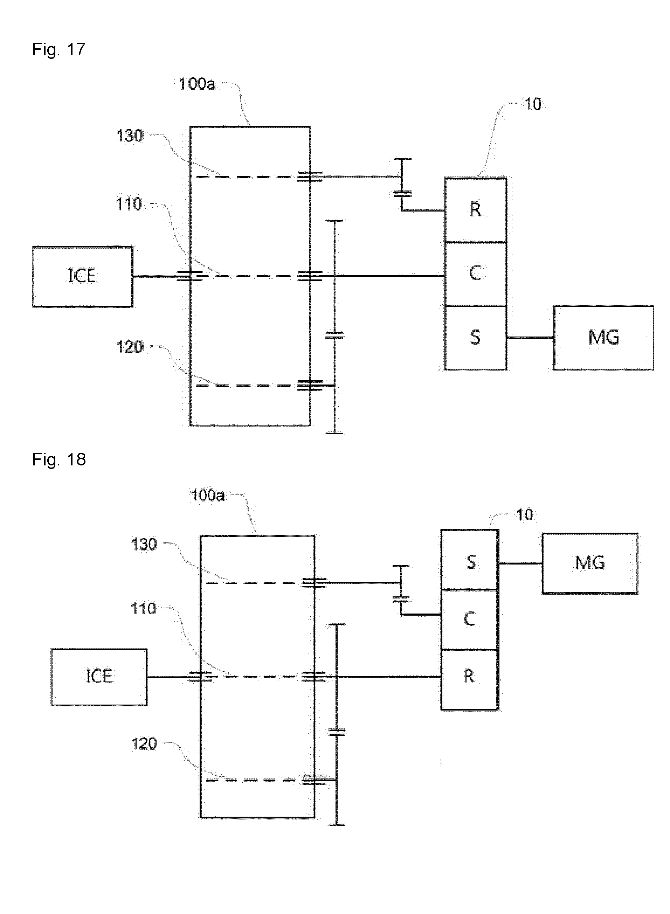

Figs. 17 and 18 show still another embodiment in accordance with the present invention and a variation thereof, respectively.

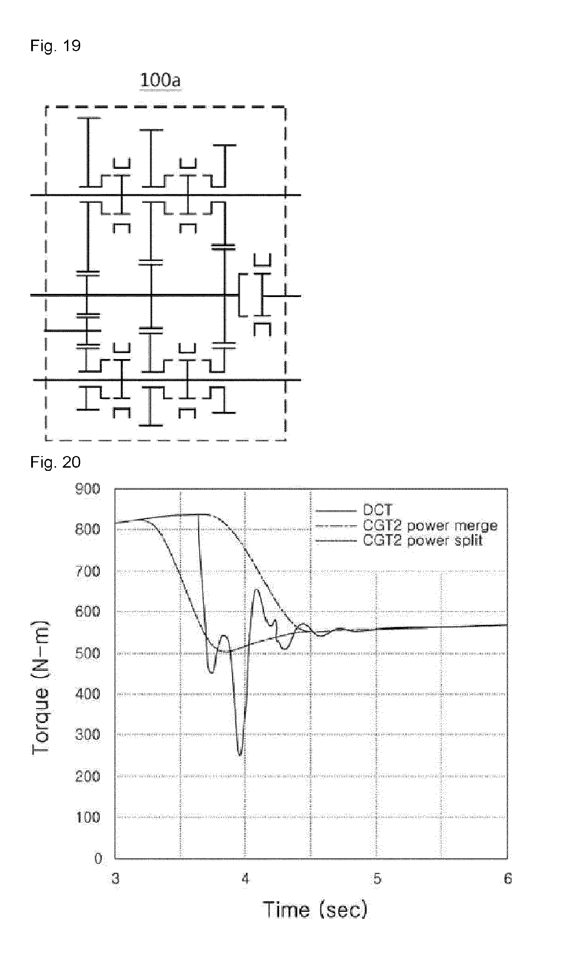

Fig. 19 show a gearbox with seven shift position which may be used in the embodiment depicted in Figs. 17 and 18.
Fig. 20 shows a simulation result regarding changes of torque in the transmission device during the shifting operation.

### DESCRIPTION OF EMBODIMENTS

Hereinafter, an exemplary embodiment of the present invention will be described in detail with reference to the accompanying drawings.

Figs. 1 and 2 show transmission device for a vehicle in accordance with an embodiment of the present invention and its variation, respectively. The transmission device includes a planetary gear device 10 functionally connected to an internal combustion engine (ICE) of the vehicle, a motor/generator (MG) functionally connected to a planetary shaft of a sun gear of the planetary gear device 10, means for restricting degrees of freedom (hereinafter, "means for restricting dof") 20 for adjusting degrees of freedom of the planetary gear device 10, and gearbox 100 having multiple input axles.

The planetary gear device 10 includes a sun gear, a plurality of planetary gears connected by a carrier, and a ring gear. Planetary shafts of the sun gear, the carrier and the ring gear are rotate about a same single axis. In the embodiment of Figs. 1 and 2, the planetary shaft of the ring gear of the planetary gear device is functionally connected to an output axle of the internal combustion engine.

The motor/generator (MG) may be selectively operated as a motor or a generator. Functions of the motor/generator are independent from its direction of rotation. That is, the motor/generator may be selectively operated as a motor or a generator whether its direction of rotation is clock-wise or counter clock-wise. In the illustrated embodiments, the planetary shaft of the motor/generator is functionally connected to the same of the sun gear of the planetary gear device 10 and thus the motor/generator may be operated as a motor for rotating the shaft of the sun gear or a generator rotated by the shaft of the sun gear for generating electric power.

Means for restricting dof 20 adjusts degrees of freedom of the planetary gear device 10 by selectively synchronizing the rotations of any two planetary shafts among three, i.e., planetary shafts of the sun gear, the carrier and the ring gear. In the illustrated embodiment, means for restricting dof 20 synchronizes the planetary shafts of the sun gear and the carrier. A dog clutch or a synchromesh may be applied as means for restricting dof 20. When means for restricting dof 20 is disengaged, the degrees of freedom of the planetary gear device 10 becomes two (2) and thus each planetary shaft rotates in a speed different from each other in accordance with kinematic relations. When means for restricting dof 20 is engaged, the degrees of freedom of the planetary gear device 10 becomes one (1) and thus all planetary shaft rotates in a single same speed.

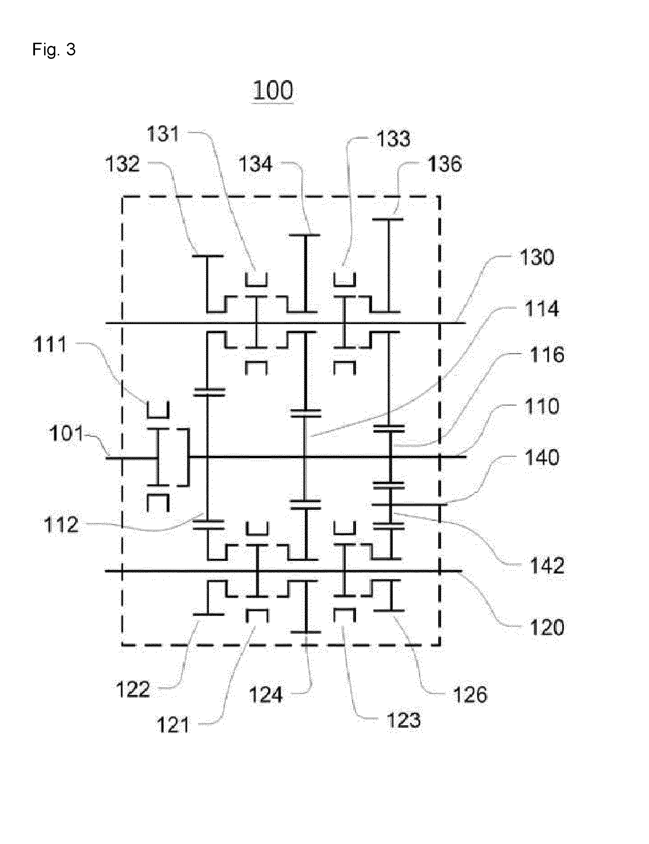

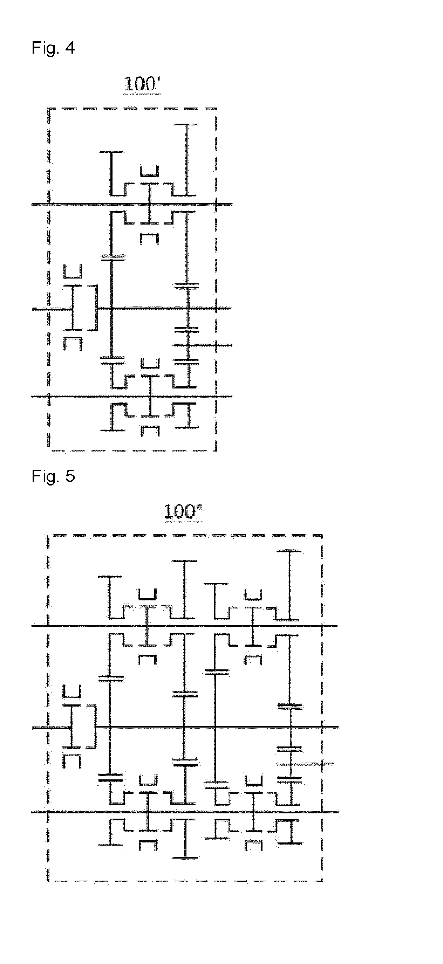

Fig. 3 shows a gearbox 100 as a typical example thereof with seven (7) speed positions (forward 6 positions and backward 1 position). As shown in Fig. 1, the gearbox 100 is located between the planetary gear device 10 and driving shafts of the vehicle and has five (5) axles 101, 110, 120, 130, 140 including an axle of backward gear 140. The gearbox that could be applied to the present invention, however, is not restricted to the illustrated architecture with seven speed positions but may has various architectures with various speed positions. For example, Figs. 4 and 5 illustrate a gearbox 100' and 100" with five (5) speed positions (forward 4 positions and backward 1 position) and one with nine (9) speed positions (forward 8 positions and backward 1 position), respectively, which may also be applied to the present invention. Backward shift may be provided not only by using the axle of backward gear as shown in Figs. 3 to 5 but also by converting the rotating direction of the motor/generator without using the axle of backward gear. In the latter case, the axle of backward gear may be omitted. Without the axle of backward gear, the gearbox 100 will include four axles 101, 110, 120, 130.

The gearbox shown in Fig. 3 includes a root axle 101 functionally connected to the planetary gear device to receive input power from the same, three axles of forward gears 110, 120, 130 mainly involved with forward drive and an axle of backward gear 140. Each axle except the root axle 101 has at least one gear thereon. The numbers of gears on each axle may be changed depending to the numbers of speed positions of the gearbox 100. One end portion of the root axle 101 (the left end portion in Fig. 3) is functionally connected with the planetary shaft of the carrier or the ring gear and the other end portion of the same (the right end portion in Fig. 3) has a first synchronizing device 111 for functionally connecting the root axle to another axle or shaft. Fig. 1 shows an embodiment in which the root axle 101 is connected to the planetary shaft of the carrier and Fig. 2 shows another embodiment in which the root axle 101 is connected to the planetary shaft of the ring gear.

A first axle 110 has one end portion (the left end portion in Fig. 3) that is functionally connected to the root axle 101 via the first synchronizing device 111 and the other end portion (the right end portion in Fig. 3) that is functionally connected to the engine for a left positioned or to the driving shaft of the vehicle for a right positioned. For example, the other end portion may be functionally connected to a differential gear device (not shown in the drawing) of the driving shaft. The rotating direction of the first axle 110 is set as same as that of the root axle 101. The first axle 110 has three first gears 112, 114, 116 arranged along the first axle in a certain distance.

A second axle 120 is functionally connected to the root axle 101 through engaged gears and has three second gears 122, 124, 126, each of which is engaged to the respective first gear 112, 114, 116. The second gears 122, 124, 126 are connected to the second axle 120 through second synchronizing devices 121, 123. Among the second gears, the rightmost one 126 is engaged via the backward gear 142 on the axle 140 with the rightmost gear 116 among the first gears. One end portion of the second axle 120 is functionally connected to the planetary shaft of the carrier and the other end portion thereof is a free end which is not connected to any axle or shaft and can rotate freely. The rotating direction of the second axle 120 is set as opposite to that of the root axle 101. In the illustrated embodiment in Fig. 1, the second axle 120 is connected to the root axle 101 through two engaged gears, whereby the rotating directions are set to be opposite to each other.

A third axle 130 has three third gears 132, 134, 136, each of which is engaged to the respective first gear 112, 114, 116 of the first axle 110. The third gears 132, 134, 136 are connected to the third axle 130 through third synchronizing devices 131, 133. One end portion of the third axle 130 is functionally connected to the planetary shaft of the ring gear when the root axle 101 is connected to the planetary shaft of the carrier or to the planetary shaft of the carrier when the root axle 101 is connected to the planetary shaft of ring gear. In Fig. 1, said one end portion of the third axle 130 is functionally connected to the planetary shaft of the ring gear and, in Fig. 2, said one end portion of the third axle 130 is functionally connected to the planetary shaft of the carrier. The other end of the third axle 130 is a free end which is not connected to any axle or shaft and can rotate freely. In the embodiment shown in Fig. 1, the root axle 101 is connected to the planetary shaft of the carrier and the third axle 130 to the planetary shaft of the ring gear via two engaged gears, whereby the rotating direction of the root axle 101 and that of the third axle 130 are opposite to each other with a certain speed ratio.

The axle of the backward gear 140 has a backward gear 142 thereon. Both end portions of the axle of the backward gear 140 are free end which are not connected to any axle or shaft and can rotate freely. Each axle except the axle of the backward gear 140 has synchronizing device(s). A dog clutch or a synchromesh may be applied as synchronizing device(s).

The first synchronizing device 111 on the root axle 101 engages or disengages the functional connection between the root axle 101 and the first axle 110. When the functional connection between the root axle 101 and the first axle 110 is disengaged, the first axle 110 receives power from other axle such as the second axle 120 or the third axle 130 via the engaged gear synchronized and delivers the same to the driving shaft of the vehicle and, when engaged, the first axle 110 receives power from the planetary shaft of the carrier and delivers the same to the driving shaft (see Fig. 1).

The second synchronizing devices 121, 123 located on the second axle 120 synchronize the rotation of the corresponding second gear and the second axle 120. That is, the second synchronizing device 121 selectively synchronizes the rotation of the corresponding second gear 122, 124 and the second axle 120 and the second synchronizing device 123 selectively synchronizes the rotation of the corresponding second gear 126 and the second axle 120.

In a similar manner, the third synchronizing devices 131, 133 located on the third axle 130 synchronize the rotation of the corresponding third gear and the third axle 130. The third synchronizing device 131 selectively synchronizes the rotation of the corresponding third gear 132, 134 and the third axle 130 and the third synchronizing device 133 selectively synchronizes the rotation of the corresponding third gear 136 and the third axle 130.

Operations of the transmission device shown in Fig. 1 will be described hereinafter.

Before the start of the vehicle, both the internal combustion engine (hereinafter, "ICE") and the motor/generator (hereinafter, "MG") stand still. Starting of the vehicle may be provided by the ICE or MG only.

First, descriptions about the starting of the vehicle by using the ICE will be provided. When the ICE is started from a standstill state, the root axle 101 and the first axle 110 of the gearbox are restrained not to rotate. Under such conditions, rotation of the shaft of the carrier of the planetary gear device is also restricted. Means for restricting dof 20 maintains disengaged. Under given conditions, the rotating direction of the planetary shaft of the sun gear is set as opposite to that of the ring gear. Therefore, when MG starts to rotate in a direction opposite to that of the output shaft of the ICE, the planetary shaft of the sun gear starts to rotate, which makes the ring gear be rotated in the opposite direction thereof and in turn the output shaft of the ICE start to rotate in the opposite direction of MG, whereby the ICE is started. After the ICE is started, MG may cease its providing of torque (or power). The gearbox shifts in forward 1 position in order to start the vehicle.

In Fig. 2, the second gear 122 of the second axle 120 corresponds to forward 1 position. The second synchronizing device 121, therefore, is engaged to synchronize the rotations of the second axle 120 and the second gear 122. Under such condition, if the root axle 101 and the first axle 110 are allowed to rotate, power of the ICE is delivered to the first axle 110 through the planetary shaft of the carrier and the second axle 120. Since the first axle 110 of the gearbox 100 is connected to the driving shaft of the vehicle, power delivered from the ICE to the gearbox 100 is next delivered to the driving shaft, which makes the vehicle to start. When the vehicle starts, rotation speed of the planetary shaft of the sun gear is synchronized to that of the carrier and then means for restricting dof is engaged, whereby all shafts of the planetary gear device rotates in a same single speed.

The vehicle may also be started by the power of MG only. As in the case of starting the vehicle by the power of the ICE, the rotation of the output axle of the gearbox 100, i.e., the first axle 110, is kept restrained. Means for restricting dof 20 becomes disengaged and the degree of freedom of the planetary gear device is set as two (2). Since the ICE is in a standstill state, the output shaft of the ICE and the planetary shaft of the ring gear are kept standing (or not-rotating). In order to ensure such states, means for restraining the rotation of the output shaft of the ICE may be provided. The first synchronizing device 111 which connects the root axle 101 and the first axle 110 is kept disengaged. For shift into forward 1 position, the second synchronizing device 122 makes the rotations of the second axle 120 and the second gear 122 synchronized.

Under such conditions, if MG starts, the sun gear will start to rotate and the planetary shaft of the carrier will rotate in the same direction of the planetary shaft of the sun gear. When the first axle 110 is allowed to rotate, the power of MG is delivered to the first axle 110 through the root axle 101 and the second axle 120, which makes the vehicle to start.

When the speed of the vehicle reaches at a certain level, the output shaft of the ICE is allowed to rotate and, by reducing the rotating speed of MG unless there is a dedicated starter for the ICE, the output shaft of the ICE is compulsorily rotated, whereby the ICE is started. When all such operation is completed, the rotation speed of the shaft of the sun gear is synchronized to that of the carrier by MG and then means for restricting dof becomes engaged, whereby all planetary shaft of the planetary gear rotates in a same single speed.

Hereinafter, descriptions regarding speed change of the vehicle from forward 1 position to forward 2 position will be provided. When the vehicle moves in a speed of forward 1 position, the power is delivered to the first gear 112 of the first axle 110 through the second gear 122 of the second axle 120. Means for restricting dof maintained as engaged. Under such conditions, if the accelerator is activated, the rotation speed of the ICE or MG is increased.

Since means for restricting dof 20 is kept engaged, rotation speed of all planetary shaft of the planetary gear device 10 is increased at the same time. When the speed of the output shaft of the ICE reaches at a sufficient level, means for restricting dof 20 is changed disengaged, whereby the degree of freedom of the planetary gear device is changed to two (2). Under given conditions, the rotation speed of the third axle 130 can be decreased relatively to the second axle 120 by increasing the rotation speed of MG.

When the rotation speed of the third axle 130 is decreased to be synchronized, the rotations of the third gear and the third axle are synchronized by the third synchronizing device 131. Then, the power is delivered both through the second axle 120 and the third axle 130. If MG generate a torque with a direction opposite to the rotation direction of the shaft of the sun gear, the second axle 120 receives a torque having a same direction to the rotation direction of the same and the third axle 130 receives a torque having an opposite direction to the rotation direction of the same.

Therefore, if MG increments a torque in a direction opposite to the rotation of the sun gear (or reducing torque in the rotating direction), the torque of the second axle 120 is decreased and that of the third axle 130 is increased. When the torque of the second axle 120 is decreased to a sufficient level, the power is delivered to the first axle 110 mainly by the third axle 130. Under such states, the second axle 120 is set to rotate freely by disengaging the second synchronizing device 122.

Next, the rotation speed of MG, i.e., the rotation speed of the planetary shaft of the sun gear, is changed to that of the carrier. When rotations of the two shafts are synchronized, means for restricting dof 20 becomes engaged, whereby all shafts of the planetary gear device rotates in a same speed. The power of MG and the ICE is delivered to the first axle 110 though the third axle 130 only.

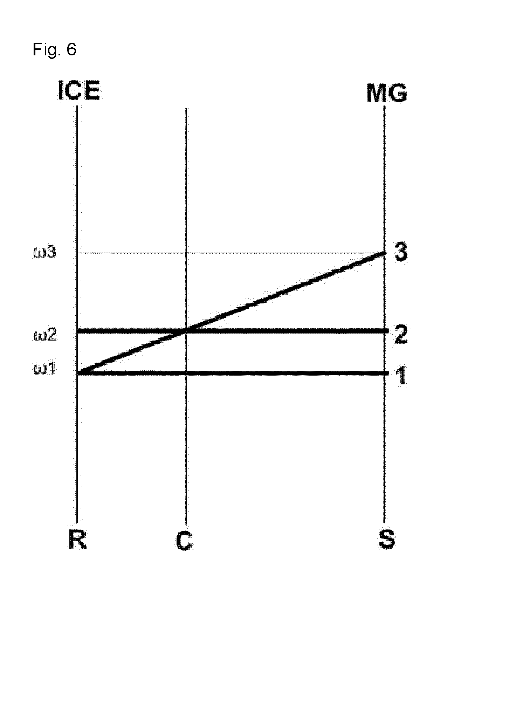

Gear shift from forward 1 position to forward 2 position will be described on the basis of collinear charts of the planetary gear device. Fig. 6 shows a collinear chart in such conditions.

State 1 in the collinear chart corresponds to a state that the vehicle moves in forward 1 position. All shafts of the planetary gear device rotate in a same speed (ω1). If the accelerator is activated, rotations speed of the ICE or MG is increased. Since means for restricting dof is engaged, the degree of freedom of the planetary gear device is one (1) and thus rotation speeds of all shafts thereof are increased at the same time.

A state in which the rotation speeds of all shafts are increased to a certain level (ω2) is indicated as state 2 in the collinear chart. Under such state, all of the torque of the ICE is delivered through the shaft of the carrier to the gearbox. Relationship of torque at such conditions is shown in Fig. 7. To the ring gear, torque of the ICE (Te) is applied and, to the carrier, torque of the gearbox (Tc) is applied. Two torques, i.e., Te and Tc, has a same magnitude but in the opposite direction to each other with no motor torque. Means for restricting dof 20 is disengaged by reducing its torque by applying motor torque T'ₘ.

After means for restricting dof 20 is disengaged, the speed ofMG is increased and the speed of the planetary shaft of the sun gear is increased (ω3). However, the rotations shaft of the carrier, which is connected to the first axle 110 (the output axle) via the second axle 120, maintains its speed (ω2). As a consequences, when the speed of the planetary shaft of the sun gear is increased, that of the ring gear will decrease and thus that of the third axle 130 will also decrease (ω1) relatively to that of the second axle 120. Such state is shown in the Fig. 6 as state 3.

When the speed of the third axle 130 is decreased and synchronized to the speed of a third gear (in this embodiment, the third gear 132 which corresponds to forward 2 position) on the third axle 130, the third synchronizing device 131 is activated to make the third axle 130 and the third gear 132 engaged. Under such conditions, the power is transmitted to the first axle 110 through both the second axle 120 which is connected to the planetary shaft of the carrier and the third axle 130 connected to that of the ring gear.

Under such state, if MG adds a torque (Tm) in a direction opposite to the rotation of the sun gear, a counter torque (Tcm) having a direction opposite to the torque (Tc) which is applied to the carrier by the second axle 120 is applied to the planetary shaft of the carrier and a counter torque (Trm) having a direction opposite to the torque (Te) which is applied to the planetary shaft of the ring gear by the ICE is applied to the ring gear. Under such conditions, the power transmitted to the first axle 110 via the second axle 120 is decreased and the power transmitted to the first axle 110 via the third axle 130 is increased (see Fig. 7).

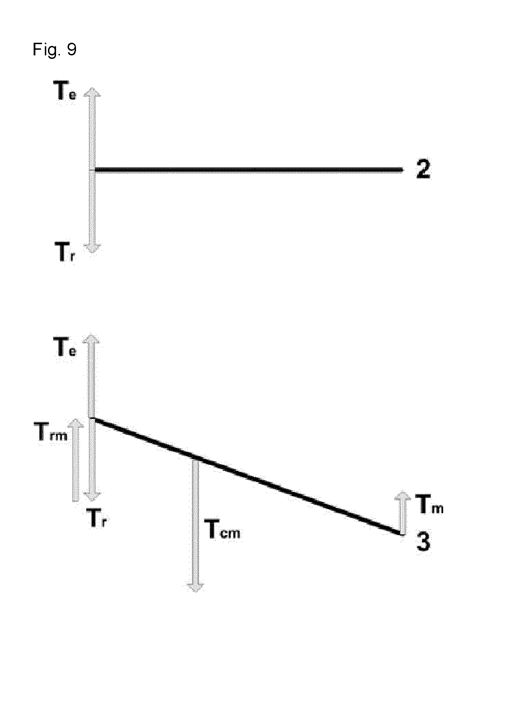

When the power transmitted to the first axle 110 through the second axle 120 is decreased into a sufficiently low level, e.g., near zero (0), the second synchronizing device 121 is disengaged to make the power not to be transmitted to the first axle 110 via the second axle 120. The speed ω3 of MG is adjusted to match the speed ω1 of the ICE and means for restricting dof 20 is engaged to change the degree of freedom of the planetary gear device 10 into one (1), which state corresponds to the state 1 shown in the collinear chart. This makes the shifting operation completed. Relationships of torques are same as those of the state two (2) in Fig. 9. That is, after the shifting operation is completed, when a certain torque from the ICE is applied to the ring gear, a torque having the same magnitude as the certain torque would be passed through the third axle to the first axle of the gearbox the ICE.

Shifting operation from forward 2 position to forward 3 position takes place in a way similar to the above descriptions. That is, shifting operation to forward 3 position is performed by changing the engagement from the third gear 132 on the third axle to the second gear 124 on the second axle. The collinear chart, however, would be a little bit different since, before the shifting operation, the third axle receives the power from the ICE and, after the shifting operation, the second axle receives the power from the ICE.

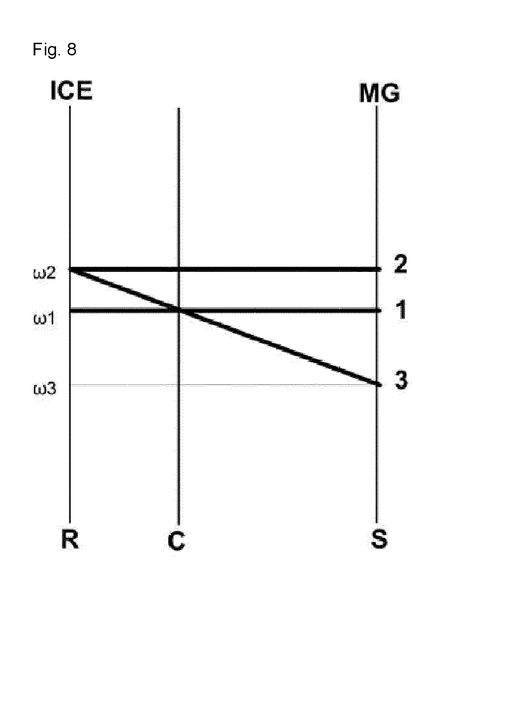

Fig. 8 shows a collinear chart in the case of the shifting operation from forward 2 position to forward 3 position. State 1 of the collinear chart (ω1) corresponds to forward 2 position of the vehicle. When the driver of the vehicle activates accelerator in order to increase the speed of the vehicle, the speed of the ICE is increased. Since means for restricting dof 20 is in a state of engagement, speed of all planetary shaft of the planetary gear device 10 will be increased at a same time. State 2 of the collinear chart corresponds to the increased speed ω2.

Fig. 9 illustrates torques applied to each gear of the planetary gear device at the state 2 of the collinear chart in Fig. 8. At the state 2, a torque from the ICE Te and another torque from the gearbox Tr are applied to the ring gear. Two torques have a same magnitude and opposite directions to each other. If means for restricting dof 20 is disengaged at this point and the speed ofMG is decreased, speed of the planetary shaft of the sun gear, which is functionally connected to MG, will be decreased (ω3).

The planetary shaft of the ring gear is functionally connected to the first axle 110 (output shaft) of the gearbox through the third axle 130 and thus will keep the increased speed (ω2). Therefore, speeds of the carrier of the planetary gear device 10 and the second axle 120, which is functionally connected to the planetary shaft of the carrier, are decreased (ω1).

Such state is shown as a state 3 in the collinear chart of Fig. 8. When the speed of the second axle is decreased to be synchronized, the second synchronizing device is activated to engage the second axle and the second gear 124. Fig. 9 shows that, when a torque from MG is applied, torque Tcm is applied to the planetary shaft of the carrier and torque Trm is applied to planetary shaft of the ring gear.

When torque transmitted from the third axle 130 through the first axle 110 (sum of Tr and Trm) become sufficiently small, the third synchronizing device 132 is disengaged and the speed of MG (ω3) is matched to that of the ICE (ω1) and then means for restricting dof 20 is engaged. Next, the planetary gear device 10 is changed into the state 1 of the collinear chart (Fig. 8), by which the shifting operation is completed. After the completion of the shifting operation, the relationships between torques are same as those of the state 2 shown in Fig. 7. That is, torque from the second axle of the gearbox is applied to the carrier and another torque having a same magnitude and opposite direction is applied to the ring gear from the ICE.

Shifting operation to forward 4 position is provided by changing the engagement from the second gear 124 on the second axle to the third gear 134 on the third axle. Shifting operation to forward 5 position is provided by changing the engagement from the third gear 134 on the third axle to the first synchronizing device 111 on the first axle. Forward 6 position is corresponds to 'over drive' and is provided by changing the engagement from the first synchronizing device 111 on the first axle to the third gear 136 on the third axle.

Shifting operation to forward 5 position in which the first axle and the root axle is functionally connected is provided as follows. First, Under a state in which the speeds of all planetary shaft of the planetary gear device is synchronized by means for restricting dof, the power of the ICE is transmitted to the first axle 110 through the third axle 130. When means for restricting dof is disengaged and thereby the degrees of freedom becomes two (2), the speed of the sun gear is decreased by MG and in turn speed of the carrier is also decreased. The root axle 101 which is functionally connected to the carrier is synchronized with the first axle 110 of the gearbox 100 and the synchronizing device 111 which functionally connects the root axle 101 and the first axle 110 is engaged. Through such operation, the power of the ICE is transmitted through the third synchronizing device on the third axle 130 and also through the first synchronizing device on the root axle 101. Under such state, a torque is applied to the planetary shaft of the sun gear by MG and thereby torque transmitted to the third synchronizing device on the third axle 130 is decreased. Next, the synchronizing device 131 which functionally connects the third gear 134 and the third axle 130 is disengaged and thereby the power of the ICE becomes not to be transmitted to the first axle 110 through the third axle 130. Shifting operation will be completed by synchronizing the speed ofMG to that of the ICE and then by engaging all planetary shafts of the planetary gear device 10. Shifting operation to forward 6 position (over-drive) is provided in reverse steps to the above.

Shifting-down operation from a higher position to a lower position is performed by following reverse steps to the above mentioned descriptions. Figs. 10 and 11 show collinear charts in case of a shifting-down operation. Fig. 10 illustrates a shifting-down operation from the third axle 130 of the gearbox to the second axle 120, and Fig. 11 from the second axle 120 to the third axle 130.

In the collinear chart shown in Fig. 10, state 1 corresponds to a state in which the power from the ICE is transmitted to the first axle 110 through the third axle 130, e.g., the vehicle is moving at forward 4 position. Since means for restricting dof 20 is maintained as engaged, all planetary shafts of the planetary gear device 10 rotates in a same speed. When the speed of the vehicle is decreased, e.g., by activating a breaking system, the planetary gear device 10 is changed into state 2 (ω2) in the collinear chart. By disengaging means for restricting dof 20 and increasing the speed of MG, the speed of the planetary shaft of the sun gear is increased (ω3). Since the planetary shaft of the ring gear is functionally connected to the first axle 110 (output axle) via the third axle 130, the speed of the ring gear thereof will be maintained as that at forward 4 position (ω2). Therefore, speeds of the carrier and the second axle 120 will be decreased to ω1. When the speed of the second axle 120 is synchronized with that of the second gear 124, the second synchronizing device 121 becomes activated for synchronizing the second axle 120 and the second gear 124, whereby the ICE power is transmitted to the first axle 110 both through the third axle 130 and the second axle 120. Under such state, if MG applies torque in a direction to the rotation of the sun gear, torque is applied to the third axle 130 in a same direction and torque is applied to the second axle in an opposite direction. When the torque and power delivered to the first axle 110 through the third axle 130 is decreased sufficiently, the third synchronizing device 131 is disengaged and thereby power is transmitted to the first axle 110 through the second axle 120 only. Next, by synchronizing the speed of MG (ω3) to that of the ICE (ω1) and engaging means for restricting dof, the degrees of freedom becomes one (1), whereby the shifting operation is completed.

In the collinear chart shown in Fig. 11, power is transmitted to the first axle 110 (output axle) through the second axle before shifting operation and through the third axle 130 after the same. Since the planetary shaft of the carrier is functionally connected to the second axle 120, even after means for restricting dof is disengaged, the carrier maintains its decreased speed. Therefore, when the speed of the sun gear is decreased, the speed of the ring gear and the third axle 130 is increased. When the speed of the third axle is synchronized to that of the third gear 132, the third synchronizing device 131 is engaged to synchronize the third axle and the third gear. Shifting procedure thereafter is performed similarly as shown in Fig. 10.

The embodiment of the present invention shown in Fig. 1 may have many variations, depending on the functional connectivity between means for restricting dof and planetary shafts of the planetary gear or between the root axle of the gearbox and planetary shafts. For example, in the embodiment shown in Fig. 1, means for restricting dof synchronizes rotations of the planetary shaft of the sun gear and that of the carrier. As a variation, means for restricting dof may be used to synchronize those of sun gear and ring gear. Furthermore, in the embodiment of the Fig. 1, the planetary shaft of the carrier is functionally connected to the first axle and the second axle and that of the ring gear to the third axle. As another variation, the planetary shaft of the carrier may be functionally connected to the third axle and that of the ring gear to the first and the second axles (see, Fig. 2). In Fig 12a, the embodiment of Fig. 1 is depicted in a different way and, in Fig. 12b, as a variation of the Fig. 12a, the first axle is functionally connected to the planetary shaft of the ring gear.

Figs. 13 and 14 illustrate another embodiments of the present invention. These embodiments are different from the previous embodiment in the following aspect: in the previous embodiment, the ICE is functionally connected to the ring gear but, in the second embodiments, to the carrier.

MG is functionally connected to the planetary shaft of the sun gear and means for restricting dof synchronizes rotations of the planetary shaft of the sun gear and any other shaft of the planetary gear device as in the first embodiment. Therefore, variations in which means for restricting dof synchronizes between the sun gear and the carrier or between the sun gear and the ring gear may also be implemented.

The collinear charts for shifting-up operations for the embodiments in Figs. 13 and 14 are substantially identical to that of the first embodiment. That is, shifting operation from the second axle to the third axle corresponds to Fig. 6 and from the third axle to the second axle to Fig. 8. However, torque relationships are different from those of the first embodiment. Figs. 15 and 16 depict torque relationships respectively corresponding to the collinear charts of Figs. 13 and 14.

Figs. 17 and 18 show another embodiments of the present invention. These embodiments are different from the previous embodiments in the following aspects: (1) in the previous embodiments, devices are arranged in an order of the ICE, the planetary gear device, the gearbox and the driving axle of the vehicle but, in the embodiments shown in Figs. 17 and 18, the gearbox is located between the ICE and the planetary gear device, (2) the driving axle of the vehicle is functionally connected either to the planetary shaft of the carrier or that of the ring gear, (3) the gearbox has a configuration in mirror image to that shown in Fig. 3 (see, Fig. 19), (4) the output shaft of the ICE is functionally connected with the first axle of the gearbox, one end portion of the root axle of the gearbox is functionally connected to the first axle via the first synchronizing device and the other end portion to the planetary shaft of the carrier (Fig. 17) or that of the ring gear (Fig. 18). The second axle is connected to the root axle via a pair of gears such that it rotates in an opposite direction. The third axle is connected to a planetary shaft which is not connected to the root axle via a pair of gears.

MG is functionally connected to the planetary shaft of the sun gear as in the first embodiment shown in Fig. 1. Similarly, means for restricting dog synchronizes rotation of the planetary shaft of the sun gear and either one of the planetary gear device. Therefore, variations to these embodiments, in which means for restricting dof may synchronizes between the sun gear and ring gear or between the sun gear and the carrier, may also be implemented.

The collinear charts for the third embodiments are substantially identical to those shown in Figs. 6 and 8. However, torque relationships during the shifting operation are partly identical to that of shown in Fig. 1 and partly identical to that shown in Fig. 13.

In Fig. 20, simulation result regarding the variation of the torque transmitted to the first axle (the output axle) during the shifting operation (time in seconds). In the graph, 'DCT' indicate such torque in the conventional double clutch transmission device, 'CGT2 power merge' in the first embodiment shown in Figs. 1 and 2, and 'CGT2 power split' in the embodiments shown in Figs. 13 and 14. As shown in those drawings, transmission device in accordance with the present invention provides smoother and more powerful shifting torque than that of the conventional devices.

While the present invention has been particularly shown and described with reference to exemplary embodiments thereof, it will be understood by those skilled in the art that various changes in form and details may be made therein without departing from the spirit and scope of the invention as defined by the appended claims.

## Claims

1. A transmission device for application to a vehicle, comprising:
a planetary gear device including a sun gear having a first planetary shaft, a carrier having a second planetary shaft, and a ring gear having a third planetary shaft, the first, the second and the third planetary shafts sharing a substantially same single rotation axis;
a motor/generator functionally connected to the first planetary shaft;
means for restricting degrees of freedom (hereinafter, 'means for restricting dof), said means for restricting dof selectively synchronizing rotation speeds of any two said planetary shafts; and,
a gearbox having one axle functionally connected to the second planetary shaft and another axle functionally connected to the third planetary shaft, the gearbox being arranged either between an internal combustion engine (hereinafter, 'ICE') of the vehicle and the planetary gear device or between the planetary gear device and a driving shaft of the vehicle.

2. The transmission device of claim 1, wherein the gearbox includes:
a root axle, an end portion of the root axle being functionally connected either to the second planetary shaft or to the third planetary shaft and the other end portion of the same having a synchronizing device for providing functional connectivity;
a first axle having at least one first gear, an end portion of the first axle being functionally connected to the root axle via the synchronizing device and the other end portion of the same being functionally connected either to the driving axle of the vehicle or to the ICE;
a second axle having at least one second gear, an end portion of the second axle being connected to the root axle in such a way that the second axle has a direction of rotation opposite to that of the root axle, and the other end portion of the same being a free end, said at least one second gear being maintained as engaged with said at least one first gear; and,
a third axle having at least one third gear, an end portion of the third axle being functionally connected to either to the second planetary shaft or to the third planetary shaft, whichever planetary shaft that does not functionally connected to the root axle, in such a way that the third axle has a direction of rotation opposite to that of the connected planetary shaft, and the other end portion of the same being a free end, said at least one third gear being maintained as engaged with said at least one first gear.

3. A transmission device for application to a vehicle, comprising:
a planetary gear device including a sun gear having a first planetary shaft, a carrier having a second planetary shaft, and a ring gear having a third planetary shaft, the first, the second and the third planetary shafts sharing a substantially same single rotation axis, the third planetary shaft being functionally connected to an ICE;
a motor/generator functionally connected to the first planetary shaft;
means for restricting dof, said means for restricting dof selectively synchronizing rotation speeds of any two said planetary shafts; and,
a gearbox arranged between the planetary gear device and a driving shaft of the vehicle, the gearbox including:
a root axle, an end portion of the root axle being functionally connected either to the second planetary shaft or to the third planetary shaft and the other end portion of the same having a first synchronizing device for providing functional connectivity;
a first axle having at least one first gear, an end portion of the first axle being functionally connected to the root axle via the first synchronizing device and the other end portion of the same being functionally connected to the driving axle of the vehicle;
a second axle having at least one second gear, an end portion of the second axle being connected to the root axle in such a way that the second axle has a direction of rotation opposite to that of the root axle, and the other end portion of the same being a free end, said at least one second gear being maintained as engaged with said at least one first gear;
a third axle having at least one third gear, an end portion of the third axle being functionally connected to either to the second planetary shaft or to the third planetary shaft, whichever planetary shaft that does not functionally connected to the root axle, in such a way that the third axle has a direction of rotation opposite to that of the connected planetary shaft, and the other end portion of the same being a free end, said at least one third gear being maintained as engaged with said at least one first gear;
a second synchronizing device for selectively synchronizing rotation of one of said at least one second gear to that of the second axle; and,
a third synchronizing device for selectively synchronizing rotation of one of said at least one third gear to that of the third axle.

4. The transmission device of claim 3, wherein said means for restricting dof synchronizes rotation of the first planetary shaft and that of either the second planetary shaft or the third planetary shaft.

5. A transmission device for application to a vehicle, comprising:
a planetary gear device including a sun gear having a first planetary shaft, a carrier having a second planetary shaft, and a ring gear having a third planetary shaft, the first, the second and the third planetary shafts sharing a substantially same single rotation axis, the second planetary shaft being functionally connected to an ICE;
a motor/generator functionally connected to the first planetary shaft;
means for restricting dof, said means for restricting dof selectively synchronizing rotation speeds of any two said planetary shafts; and,
a gearbox arranged between the planetary gear device and a driving shaft of the vehicle, the gearbox including:
a root axle, an end portion of the root axle being functionally connected either to the second planetary shaft or to the third planetary shaft and the other end portion of the same having a first synchronizing device for providing functional connectivity;
a first axle having at least one first gear, an end portion of the first axle being functionally connected to the root axle via the first synchronizing device and the other end portion of the same being functionally connected to the driving axle of the vehicle;
a second axle having at least one second gear, an end portion of the second axle being connected to the root axle in such a way that the second axle has a direction of rotation opposite to that of the root axle, and the other end portion of the same being a free end, said at least one second gear being maintained as engaged with said at least one first gear;
a third axle having at least one third gear, an end portion of the third axle being functionally connected to either to the second planetary shaft or to the third planetary shaft, whichever planetary shaft that does not functionally connected to the root axle, in such a way that the third axle has a direction of rotation opposite to that of the connected planetary shaft, and the other end portion of the same being a free end, said at least one third gear being maintained as engaged with said at least one first gear;
a second synchronizing device for selectively synchronizing rotation of one of said at least one second gear to that of the second axle; and,
a third synchronizing device for selectively synchronizing rotation of one of said at least one third gear to that of the third axle.

6. The transmission device of claim 5, wherein said means for restricting dof synchronizes rotation of the first planetary shaft and that of either the second planetary shaft or the third planetary shaft.

7. A transmission device for application to a vehicle, comprising:
a planetary gear device including a sun gear having a first planetary shaft, a carrier having a second planetary shaft, and a ring gear having a third planetary shaft, the first, the second and the third planetary shafts sharing a substantially same single rotation axis;
a motor/generator functionally connected to the first planetary shaft;
means for restricting dof, said means for restricting dof selectively synchronizing rotation speeds of any two said planetary shafts; and,
a gearbox arranged between an ICE of the vehicle and the planetary gear device, the gearbox including:
a root axle, an end portion of the root axle being functionally connected either to the second planetary shaft or to the third planetary shaft and the other end portion of the same having a first synchronizing device for providing functional connectivity;
a first axle having at least one first gear, an end portion of the first axle being functionally connected to the root axle via the first synchronizing device and the other end portion of the same being functionally connected to the ICE of the vehicle;
a second axle having at least one second gear, an end portion of the second axle being connected to the root axle in such a way that the second axle has a direction of rotation opposite to that of the root axle, and the other end portion of the same being a free end, said at least one second gear being maintained as engaged with said at least one first gear;
a third axle having at least one third gear, an end portion of the third axle being functionally connected to either to the second planetary shaft or to the third planetary shaft, whichever planetary shaft that does not functionally connected to the root axle, in such a way that the third axle has a direction of rotation opposite to that of the connected planetary shaft, and the other end portion of the same being a free end, said at least one third gear being maintained as engaged with said at least one first gear;
a second synchronizing device for selectively synchronizing rotation of one of said at least one second gear to that of the second axle; and,
a third synchronizing device for selectively synchronizing rotation of one of said at least one third gear to that of the third axle.

8. The transmission device of claim 7, wherein said means for restricting dof synchronizes rotation of the first planetary shaft and that of either the second planetary shaft or the third planetary shaft.

9. The transmission device of claim 7, wherein either the second planetary shaft or the third planetary shaft is functionally connected to a driving shaft of the vehicle.

10. A method for shifting of a vehicle using any one of the transmission device in accordance with claims 3, 5 and 7, comprising the steps of:
(a) transmitting torque from the ICE or the driving shaft of the vehicle to the first axle via either the second synchronizing device of the second axle or the third synchronizing device of the third axle;
(b) disengaging said means for restricting dof, whereby degrees of freedom of the planetary gear device becomes two (2);
(c) rotating, by the motor/generator, the first planetary shaft and synchronizing rotation of either the second axle or the third axle through which said torque from the ICE or the driving shaft is not being transmitted;
(d) decreasing torque transmitted to any one of said two synchronizing devices by applying, by the motor/generator, a torque to the first planetary shaft under a state that the torque from the ICE or the driving shaft is transmitted to the first axle through both of the second axle and the third axle;
(e) disengaging said one of said synchronizing device in step (d) when the torque transmitted to said one of said synchronizing device is decreased to a sufficiently low level;
(f) synchronizing the speed of the motor/generator to that of the second planetary shaft or the third planetary shaft; and,
(g) engaging said means for restricting dof, whereby rotation speeds of all of said planetary shafts are synchronized.

11. A method for shifting of a vehicle using any one of the transmission device in accordance with claims 3, 5 and 7, comprising the steps of:
(a) transmitting torque from the ICE or the driving shaft of the vehicle through the first synchronizing device on the root axle to the first axle;
(b) disengaging said means for restricting dof, whereby degrees of freedom of the planetary gear device becomes two (2);
(c) rotating, by the motor/generator, the first planetary shaft and synchronizing, by the third synchronizing device, rotation of the third axle with that of said at least one third gear thereon;
(d) decreasing torque transmitted to the first synchronizing device by applying, by the motor/generator, a torque to the first planetary shaft under a state that torque from the ICE or the driving shaft is transmitted to the first axle through both of the root axle via the first synchronizing device and the third axle via the third synchronizing device;
(e) disengaging the first synchronizing device when the torque transmitted to the first synchronizing device is decreased to a sufficiently low level;
(f) synchronizing the speed of the motor/generator to that of the second planetary shaft or the third planetary shaft; and,
(g) engaging said means for restricting dof, whereby rotation speeds of all of said planetary shafts are synchronized.

12. A method for shifting of a vehicle using any one of the transmission device in accordance with claims 3, 5 and 7, comprising the steps of:
(a) transmitting torque from the ICE or the driving shaft of the vehicle through the planetary gear device to the first axle via the third synchronizing device of the third axle;
(b) disengaging said means for restricting dof, whereby degrees of freedom of the planetary gear device becomes two (2);
(c) adjusting, by the motor/generator, speed of the first planetary shaft and synchronizing rotation of the root axle with that of the first axle;
(d) engaging, by the first synchronizing device, the root axle and the first axle;
(e) decreasing torque transmitted to the third synchronizing device by adjusting a torque applied by the motor/generator to the first planetary shaft under a state that torque from the ICE or the driving shaft is transmitted through both of the first synchronizing device and the third synchronizing device;
(f) disengaging the third synchronizing device when the torque transmitted to the third synchronizing device is decreased to a sufficiently low level;
(g) synchronizing speed of the motor/generator to that of the second planetary shaft or the third planetary shaft; and,
(h) engaging said means for restricting dof, whereby rotation speeds of all of said planetary shafts are synchronized.

13. A gearbox for application to a vehicle, comprising:
a root axle, an end portion of the root axle being functionally connected either to the second planetary shaft or to the third planetary shaft and the other end portion of the same having a first synchronizing device for providing functional connectivity;
a first axle having at least one first gear, an end portion of the first axle being functionally connected to the root axle via the first synchronizing device and the other end portion of the same being functionally connected either to the driving axle of the vehicle or to the ICE;
a second axle having at least one second gear, an end portion of the second axle being connected to the root axle in such a way that the second axle has a direction of rotation opposite to that of the root axle, and the other end portion of the same being a free end, said at least one second gear being maintained as engaged with said at least one first gear;
a third axle having at least one third gear, an end portion of the third axle being functionally connected to either to the second planetary shaft or to the third planetary shaft, whichever planetary shaft that does not functionally connected to the root axle, in such a way that the third axle has a direction of rotation opposite to that of the connected planetary shaft, and the other end portion of the same being a free end, said at least one third gear being maintained as engaged with said at least one first gear which is also engaged simultaneously with said at least one second gear;
a second synchronizing device for selectively synchronizing rotation of one of said at least one second gear to that of the second axle; and,
a third synchronizing device for selectively synchronizing rotation of one of said at least one third gear to that of the third axle.

14. The gearbox of claim 13, further comprising:
a backward drive gear axle being arranged between the first axle and either the second axle or the third axle and having a backward drive gear engaged with said at least one first gear on the first axle and said at least one gear on either the second axle or the third axle.

15. A vehicle having the transmission device in accordance with any one of claims 3, 5 and 7.
